# EUROPÄISCHE PATENTSCHRIFT

(11) **EP 2 911 492 B1**
(45) Veröffentlichungstag und Bekanntmachung des Hinweises auf die Patenterteilung: **27.06.2018**
(21) Anmeldenummer: 13776757.0
(22) Anmeldetag: 08.10.2013
(51) Int. Cl.: A01B 63/00

(54) **FAHRBARES UND/ODER AN EIN TRÄGERFAHRZEUG ANBAUBARES BODENBEARBEITUNGSGERÄT**
SOIL-WORKING MACHINE WHICH IS MOBILE AND/OR CAN BE MOUNTED ON A CARRIER VEHICLE
ENGIN DE TRAVAIL DU SOL MOBILE ET/OU MONTABLE SUR UN VÉHICULE PORTEUR

(30) Priorität: 23.10.2012 DE 202012104064 U
(43) Veröffentlichungstag der Anmeldung: 02.09.2015
(73) Patentinhaber: Stehr Baumaschinen GmbH, 36318 Schwalmtal-Storndorf (DE)
(72) Erfinder: STEHR, Juergen, 36318 Schwalmtal-Storndorf (DE)
(74) Vertreter: Benninger, Johannes
(86) Internationale Anmeldenummer: PCT/EP2013/070886
(87) Internationale Veröffentlichungsnummer: WO 2014/063917

(56) Entgegenhaltungen:
- WO-A1-2010/073206
- WO-A1-2012/116821
- CA-A- 974 111
- DE-A1-102010 050 831
- DE-B3- 10 357 074

## Beschreibung

Die vorliegende Erfindung betrifft ein fahrbares, selbstfahrendes und/oder an ein Trägerfahrzeug anbaubares oder mit diesem verbindbares Bodenbearbeitungsgerät mit den Merkmalen des unabhängigen Anspruches 1. Die Erfindung betrifft insbesondere eine Fräsvorrichtung, die zum Einsatz im Straßenbau, Tiefbau wie auch in der Landwirtschaft eignet.

In dieser Fräsvorrichtung ist eine Fräswalze angeordnet, die hydraulisch oder mechanisch angetrieben in eine Rotation gebracht wird. Diese Rotation erfolgt über eine annähernd horizontale Drehachse. Die Fräswalze weist an ihrem Außenumfang geeignete Werkzeugelemente auf, die vorzugsweise auswechselbar sind.

Besonders bei den kompakteren Ausführungen, die als Anbaugeräte ausgebildet sind und problemlos mit dem Dreipunkt-Kraftheber einer landwirtschaftlichen Zug- oder Arbeitsmaschine angehoben und abgesenkt werden können, besteht eine erhöhte Gefahr, dass in der Umgebung befindliche Personen in die Nähe des Arbeitsbereichs der Fräswerkzeuge gelangen, im ungünstigsten Fall sogar verletzt werden könnten. Aus diesem Grund ist bei solchen transportablen und/oder schwenkbaren Fräswerkzeugen auf eine erhöhte Sorgfalt bei der Verkleidung und/oder Abdeckung rotierender Teile und Werkzeuge zu achten.

Die WO 2012/116821 A1 offenbart ein an einem Baggerausleger geführtes Fräswerkzeug, das zum Abtragen von festen Oberflächen wie Straßenbelägen vorgesehen ist. Eine umseitige Einhausung des rotierenden Fräswerkzeuges lässt dieses an der Unterseite herausragen, so dass es durch Bewegungen des schwenkbaren Baggerarms weitgehend horizontal geführt werden kann. Das nach unten über den Rand der Einhausung ragende Umfangssegment des rotierenden Fräswerkzeuges begrenzt gleichzeitig seine Arbeitstiefe. Zwei höhenverstellbare seitliche Stützschilde erleichtern die horizontale Führung des Fräswerkzeuges und ermöglichen auch bei unterschiedlichen Höhenniveaus des Untergrundes zu beiden Seiten des Eingriffsbereichs des Fräswerkzeuges eine beidseitige stützende Führung.

Ein kompaktes fahrbares Bodenbearbeitungsgerät mit einstellbarer Arbeitshöhe ist weiterhin aus der WO 2010/073206 A1 bekannt. Aus der CA 974 111 A ist ein Bodenbearbeitungswerkzeug bekannt, dessen Werkzeugwelle exzentrisch gelagert ist. Da keines der bekannten kompakten Bodenbearbeitungsgeräte einen effektiven Schutz gegen Berührungen der rotierenden Fräswerkzeuge bietet, der andererseits die einfache Handhabung und/oder die Höhenverstellbarkeit der Maschine nicht anderweitig beeinträchtigt, besteht das Ziel der vorliegenden Erfindung in der Behebung dieser Nachteile.

Dieses Ziel der Erfindung wird mit dem Gegenstand des unabhängigen Anspruchs 1 erreicht. Merkmale vorteilhafter Weiterbildungen der Erfindung lassen sich den abhängigen Ansprüchen entnehmen. Zur Erreichung des genannten Ziels schlägt die Erfindung eine Vorrichtung zum Anbau an eine selbstfahrende Arbeitsmaschine oder als Anbauvorrichtung für einen landwirtschaftlichen Traktor oder einen Radlader o. dgl. Arbeitgerät vor, die mit der Arbeitsmaschine verbunden sein kann und/oder mit dieser verbindbar ausgestaltet sein kann. So kann die erfindungsgemäße Vorrichtung bspw. mit einem Heck-Kraftheber einer landwirtschaftlichen Zugmaschine (insbesondere Traktor) oder mit einem steuerbaren Auslegerarm einer Baumaschine o. dgl. lösbar verbunden sein bzw. werden. Unter einer lösbaren Verbindung wird im vorliegenden Zusammenhang eine mechanische Koppelung verstanden, bei der das Gerät über die steuerbaren bzw. heb- und senkbaren Halteelemente in eine Transportstellung gebracht wird. Dagegen wird die Vorrichtung in einer Arbeits- oder Betriebsstellung mittels vorhandener Hebe- und Absenkvorrichtungen komplett auf den Boden gebracht bzw. abgesenkt. Die eigentliche Tiefeneinstellung erfolgt dadurch, dass die Fräswalze innerhalb des Gehäuses der Vorrichtung verschwenkt wird. Diese Verschwenkung erfolgt gemäß der vorliegenden Erfindung über eine exzentrische Lagerung, die außerhalb der Drehachse der Fräswalze angeordnet ist. Durch diese exzentrische Lagerung wird eine Antriebswelle mit Zahnrad geführt, das mit einem weiteren Zahnrad in kämmendem Eingriff steht, das auf der mittigen Antriebs- und Lagerungswelle der Fräswalze angebracht ist. Über diese Lagerung - vergleichbar einem Stirnradgetriebe - lassen sich verschiedene Übersetzungen realisieren.

Das erfindungsgemäße Bodenbearbeitungswerkzeug bzw. -gerät umfasst wenigstens eine Werkzeugwelle, die in einer Betriebslage ungefähr horizontal rotiert und mechanisch oder hydraulisch angetrieben ist. Die Werkzeugwelle ist mit einer Vielzahl von umfänglich und über ihre Breite verteilt angeordneten Werkzeugelementen ausgestattet, die der Material abtragenden Bodenbearbeitung dienen. Zudem ist eine die Werkzeugwelle abschirmende Einhausung vorhanden, in der die Werkzeugwelle rundherum nach oben hin komplett eingeschlossen ist. Die Einhausung kann gleichzeitig einen Geräterahmen bilden, der mit Aufhängungs- und/oder Koppelelementen zur lösbaren Verbindung mit dem Trägerfahrzeug - bspw. der landwirtschaftlichen Maschine bzw. mit dem Traktor, Bagger o. dgl. - versehen ist. Ein wesentliches Merkmal der vorliegenden Erfindung, mit dem das oben genannte Ziel verwirklicht ist, besteht darin, dass die Werkzeugwelle weitgehend in jeder Betriebslage durch die Einhausung abgeschirmt ist, so dass eine versehentliche Berührung oder Kontaktierung einer Person oder eines Gegenstandes nahezu ausgeschlossen werden kann. Zu diesem Zweck wirkt die Einhausung in einer Weise mit der rotierenden Werkzeugwelle zusammen, dass die Einhausung bei jeder Betriebslage des Bodenbearbeitungswerkzeugs und der im Eingriff mit einer zu bearbeitenden Bodenoberfläche befindlichen Werkzeugwelle bis zum Boden reicht oder zumindest teilweise dort aufliegt.

Dies kann insbesondere dadurch erreicht werden, dass die Werkzeugwelle relativ zur Einhausung höhenverstellbar ausgeführt ist. Auf diese Weise kann die Eingriffstiefe der Werkzeugwelle in den Boden variabel gehalten sind, insbesondere unter weitgehend gleichbleibender Abdeckung oder Abschirmung der rotierenden Werkzeugwelle durch die Einhausung, unabhängig von der jeweils aktuellen Eingriffstiefe der rotierenden Werkzeugwelle bzw. deren Werkzeugelementen. Die variable Abschirmung kann bei dem erfindungsgemäßen Bodenbearbeitungswerkzeug dadurch erreicht werden, dass die Werkzeugwelle mit unterschiedlicher Eingriffstiefe in den Boden auch unterschiedlich weit nach unten aus der Einhausung herausragt. Da bei angehobenem Bodenbearbeitungswerkzeug und weiterhin drehender Werkzeugwelle unter ungünstigen Umständen eine Kontaktierung nicht ganz ausgeschlossen werden kann, obwohl die Werkzeugwelle nach unten nicht mehr aus der Einhausung ragt und somit zu allen Seiten vollständig abgedeckt ist, kann es ggf. sinnvoll sein, eine Abschaltautomatik - ggf. kombiniert mit einer mechanischen Bremse - vorzusehen, die für einen schnellen und verzögerungsarmen Stillstand der Werkzeugwelle sorgt, sobald das Gerät angehoben wird. Auf diese Weise kann ein versehentliches Weiterlaufen der Werkzeugwelle unterbunden werden, wenn das komplette Gerät, Einhausung und Werkzeugwelle vom Boden abgehoben, einzgezogen und nach oben verschwenkt wird, was bspw. für Transport- oder Umsetzfahrten sinnvoll ist. Erfindungsgemäß weist die Höhenverstellbarkeit der Werkzeugwelle gegenüber der Einhausung einen Verstellweg auf, der zumindest abschnittsweise einer gekrümmten Kurve folgt. Ein solcher kurvenförmiger Verstellweg für die Werkzeugwelle ist dadurch realisiert, dass die Werkzeugwelle beidseitig in der Einhausung und/oder einem Maschinenrahmen über Exzenterlagerungen höhenverstellbar gehalten und gelagert ist. Mit Hilfe dieser Exzenterlagerungen der Werkzeugwelle ist dafür gesorgt, dass bei unterschiedlichen Bearbeitungstiefen der Maschine nicht die Einhausung oder der Maschinenrahmen angehoben oder abgesenkt wird, sondern im Wesentlichen nur die darin gelagerte Werkzeugwelle. Zu diesem Zweck ist die Exzenterlagerung bzw. sind die beidseitigen Exzenterlagerungen der Werkzeugwelle mit einem Stellelement oder mit mehreren Stellelementen gekoppelt, das/die die exzentrisch gelagerten Elemente verdrehen und auf diese Weise die Werkzeugwelle gegenüber der Einhausung anheben oder absenken kann/können.

Eine solche Verstellbarkeit der Werkzeugwelle gegenüber der Einhausung bzw. dem Maschinenrahmen des Bodenbearbeitungswerkzeuges kann in vorteilhafter Weise zur exakten Steuerung der Bearbeitungstiefe genutzt werden. Da die Maschine beim Beginn der Bearbeitung normalerweise soweit abgesenkt wird, bis der untere Rand der Einhausung am Boden aufliegt bzw. nur noch gering vom Boden beabstandet ist, kann diese Betriebsstellung in vorteilhafter Weise zur Generierung eines Referenzwertes verwendet werden, so dass die Bearbeitungstiefe und Eingriffstiefe der Fräswelle bzw. der Werkzeugwelle weitestgehend mittels des wenigstens einen Stellelementes bzw. mittels der zwei oder mehr Stellelemente zur Verdrehung der exzentrischen Wellenlagerungen gesteuert werden kann.

Das wenigstens eine Stellelement zur Verdrehung der exzentrischen Wellenlagerung, seine Wirkungsweise und seine Anlenkung können unterschiedlich ausgebildet sein. So kann das Stellelement bspw. einen oder mehrere Hydraulik- oder Pneumatikzylinder umfassen, die mit einem Ausleger der Exzenterlagerung verbunden sind und durch Linearhubbewegungen über diesen Ausleger den Exzenter unter gleichzeitiger Anhebung oder Absenkung der Werkzeugwelle verdrehen. Grundsätzlich kann das wenigstens eine Stellelement durch jede denkbare Art eines Linearantriebs gebildet sein, bspw. durch einen Hydraulikzylinder, einen Pneumatikzylinder, einen elektrischen Linearantrieb o. dgl., wobei alle diese Linearantriebe jeweils doppelt wirkend ausgebildet sein sollten, um schnelle Stellbewegungen in beide Richtungen ausführen zu können. Wahlweise kann das Stellelement jedoch auch durch einen Drehantrieb gebildet sein, der in geeigneter Weise mit der Exzenterlagerung zusammenwirkt, bspw. durch direkte oder fluchtende Montage auf der drehbaren Exzenterlagerung oder durch versetzte Anordnung und geeignete Wirkverbindung, bspw. mittels Zahnrädern, Ketten- oder Riemenantrieb o. dgl.

Wenn im vorliegenden Zusammenhang von einem Stellantrieb oder von Stellelementen die Rede ist, so ist damit grundsätzlich der abstrakte Begriff des steuerbaren Stellgliedes oder Stellelementes gemeint, nicht zwingend die konkreten Stellzylinder. Normalerweise ist der Stellantrieb in einer Weise symmetrisch aufgebaut, dass an beiden Stirnseiten der Werkzeugwelle, an denen diese in den Exzenterlagerungen drehbar gelagert ist, weitgehend identisch aufgebaute Stellantriebe bzw. Stellzylinder angeordnet sind, die sich sinnvollerweise an den gegenüber liegenden Außenseiten der Einhausung befinden. Jede der Exzenterlagerungen kann bspw. einen Lagerschild aufweisen, der drehbar in der Seitenwand der Einhausung bzw. des Maschinenrahmens gelagert ist und über einen Stellhebel verfügt, an dem das Stellelement bzw. der Stellzylinder angelenkt ist. Durch die maschinenfeste Anlenkung des anderen Endes des Stellzylinders kann dessen gesteuerte Auszugs- oder Einzugsbewegung den Lagerschild in gewünschter Weise verdrehen, wodurch gleichzeitig die exzentrisch darin gelagerte Werkzeugwelle in gewünschter Weise in kurvenförmiger Bewegung angehoben oder abgesenkt werden kann.

Wahlweise kann das Stellelement auch wenigstens ein Zugmittel umfassen, das mit einem Verstellrad an der Exzenterlagerung zusammenwirkt und im Eingriff steht, wobei eine Verstellung des Zugmittels ein Verdrehen des Exzenters bzw. des die Werkzeugwelle exzentrisch lagernden Lagerschildes bewirkt. Diese Verstellvariante kann bspw. ein mehrfach umgelenktes Zugmittel wie eine Rollen- oder Gliederkette oder einen Zugriemen o. dgl. umfassen, der bspw. über zwei endseitige Drehantriebe verfügt, die jeweils gemeinsam gleichsinnig verdreht werden können, wodurch das damit im Eingriff stehende Lagerschild in gewünschter Weise um einen definierten Drehwinkel verdreht werden kann, wodurch gleichzeitig die exzentrisch darin gelagerte Werkzeugwelle in gewünschter Weise in kurvenförmiger Bewegung angehoben oder abgesenkt werden kann. Anstelle der endseitigen Drehantriebe können auch linear verschiebbare Stellelemente vorgesehen sein, die an ihren Enden jeweils Umlenkrollen, Fixierungen für das Zugmittel o. dgl. aufweisen und wechselweise gegensinnig bewegbar sind. Wird einer der Stellantriebe ausgeschoben, wird das Zugmittel, das mit seinem Ende dort oder an anderer Stelle fest verankert sein muss, in diese Richtung gezogen, so dass gleichzeitig der andere Stellantrieb eingeschoben werden muss, um einen entsprechenden Abschnitt des Zugmittels nachzulassen. Durch die Umschlingung des drehbaren Lagerschildes der Exzenterlagerung mit dem zwischen den beiden wechselseitig steuerbaren Stellgliedern befindlichen Zugmittelabschnitt erfolgt die Drehung des Lagerschildes um einen definierten Winkel, was wiederum die Werkzeugwelle entlang ihres gekrümmten Verstellweges anhebt oder absenkt.

Als Werkzeugwelle kann insbesondere eine rotierende Fräswalze zum Einsatz kommen, die insbesondere eine Vielzahl von Rundschaft-Meißeln oder dergleichen Eingriffs- oder Werkzeugelemente aufweisen kann, die für die Material abtragende Einwirkung auf feste Bodenoberflächen wie Asphalt- oder Betondecken etc. geeignet sind. Diese Werkzeugwelle bzw. Fräswalze kann verschiedene Arbeitsbreiten aufweisen.

Um die oben beschriebene exzentrische Lagerung in den beidseitig in der Einhausung bzw. im Maschinenrahmen drehbar gelagerten Lagerschilden zu realisieren, kann bei dem Bodenbearbeitungswerkzeug vorgesehen sein, dass die Werkzeugwelle über ein Vorgelegegetriebe und/oder wenigstens eine Zahnradpaarung mit einem mit den Exzenterlagerungen fluchtenden Antriebsrad gekoppelt ist. Dieses Antriebsrad kann wiederum über einen Ketten- oder Riementrieb mit einer vorzugsweise oberhalb des Verstellbereichs der Werkzeugwelle liegenden Antriebswelle gekoppelt sein, die über ein Verteilergetriebe die Kraft mechanisch einleitet. Auch kann ein Antrieb direkt über einen Ölmotor erfolgen. Auch eine Antriebsverbindung über einen Stirnradantrieb ist möglich. Hierbei kann der Antriebsmotor bspw. oberhalb der Werkzeugwelle angeordnet sein und über ein Stirnradgetriebe mit der Werkzeugwelle gekoppelt sein.

Eine weitere sinnvolle Option des erfindungsgemäßen Bodenbearbeitungswerkzeugs kann darin bestehen, dass innerhalb der Einhausung eine Schlagleiste angeordnet ist, die für die Zerkleinerung des abgetragenen Gesteins sorgen kann. Eine solche Schlagleiste kann vorzugsweise oberhalb der Werkzeugwelle in der Einhausung angeordnet sein, so dass je nach Verstellhöhe der Fräswalze ein variabler Abstand eingestellt werden kann, was wiederum Auswirkungen auf die Größe der Bruchstücke der an der Schlagleiste zerkleinerten Steine haben kann.

Wahlweise können auch mehrere solcher Schlagleisten innerhalb der Einhausung angeordnet sein, die bspw. in Drehrichtung der Werkzeugwelle hintereinander angeordnet sein können. Bei einer solchen Anordnung kann es ggf. sinnvoll sein, in Drehrichtung der Werkzeugwelle oder Fräswalze allmählich kleinere Abstände zwischen dem Außenumfang der Werkzeugwelle und den Schlagleisten vorzusehen, so dass diese in der Lage sind, das abgetragene Gestein weitgehend vollständig in eine gewünschte Größe zu zerkleinern. Aufeinander folgende Schlagleisten mit gleichen oder geringer werdenden Abständen sorgen dafür, dass keine Gesteinsbrocken unzerkleinert bleiben oder zu große Gesteinsbrocken verbleiben.

Eine weitere sinnvolle Option kann darin bestehen, die wenigstens eine Schlagleiste in ihrer Höhe innerhalb der Einhausung verstellbar auszuführen. Bei mehreren hintereinander angeordneten Schlagleisten kann es sinnvoll sein, alle oder nur einige dieser Schlagleisten höhenverstellbar auszuführen.

Die vorliegende Erfindung bezieht sich weiterhin auf eine Maschinenkombination, die ein Zugfahrzeug gemäß obiger Definition - bspw. ein landwirtschaftliches Zugfahrzeug wie bspw. ein Traktor - sowie ein daran front- oder heckseitig angelenktes, höhenverstellbar geführtes Bodenbearbeitungswerkzeug gemäß einer der zuvor beschriebenen Ausführungsvarianten umfasst.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Seitenansicht einer Maschinenkombination mit einem landwirtschaftlichen Zugfahrzeug und einem daran heckseitig angelenkten und höhenverstellbar geführten Bodenbearbeitungswerkzeug.
Fig. 2 zeigt in drei unterschiedlichen Ansichten eines Ausführungsvariante des erfindungsgemäßen Bodenbearbeitungswerkzeugs.
Fig. 3 zeigt eine weitere Ausführungsvariante zur Verstellung der Arbeitshöhe einer Werkzeugwelle des Bodenbearbeitungswerkzeugs.
Fig. 4 zeigt in drei schematischen Darstellungen unterschiedliche Varianten für die Anordnung einer Schlagleiste oder mehrerer Schlagleisten oberhalb einer rotierenden Werkzeugwelle des Bodenbearbeitungswerkzeugs gemäß Fig. 2 oder Fig. 3.
Fig. 5 zeigt eine schematische Darstellung einer Motoranordnung zum Antrieb der Werkzeugwelle des Bodenbearbeitungswerkzeugs.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung ausgestaltet sein kann und stellen keine abschließende Begrenzung dar.

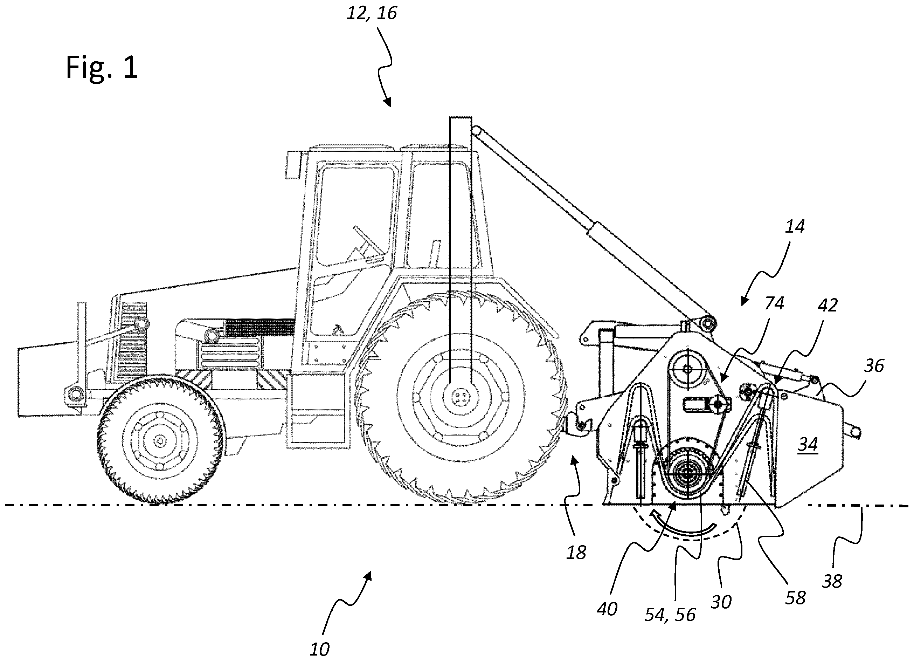

Die schematische Seitenansicht der Fig. 1 zeigt eine Maschinenkombination 10, bestehend aus einem landwirtschaftlichen Zugfahrzeug 12 und einem daran heckseitig angelenkten und höhenverstellbar geführten Bodenbearbeitungswerkzeug 14. Das Zugfahrzeug 12 ist im gezeigten Ausführungsbeispiel durch einen herkömmlichen Traktor 16 gebildet, der zumindest an seinem Heck einen Dreipunkt-Kraftheber 18 aufweist, an dem das Bodenbearbeitungswerkzeug 14 angelenkt und mit dem es um eine horizontale Querachse der Maschinenkombination 10 heb- und senkbar ist.

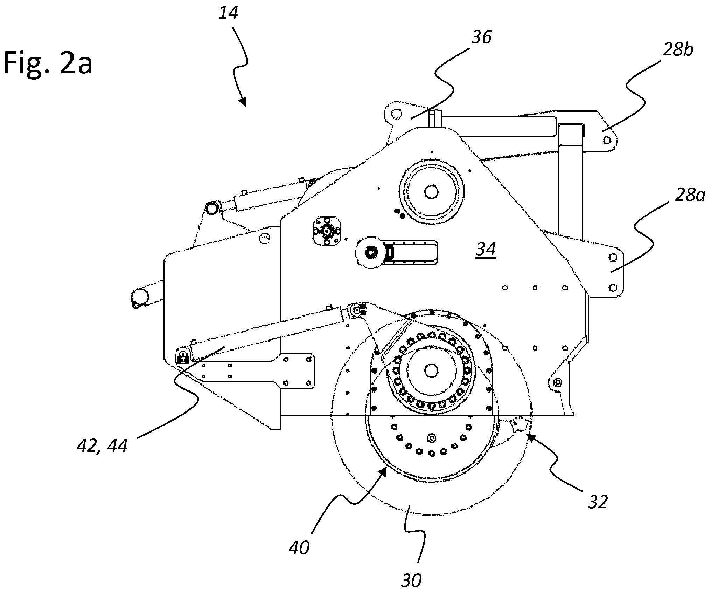

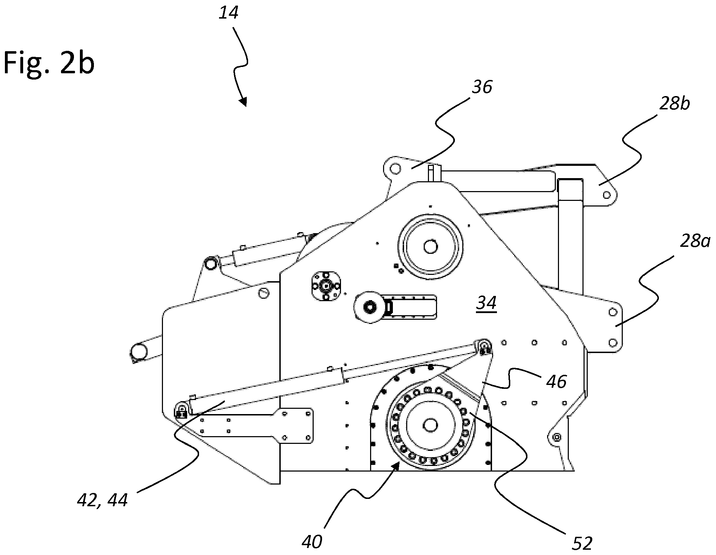

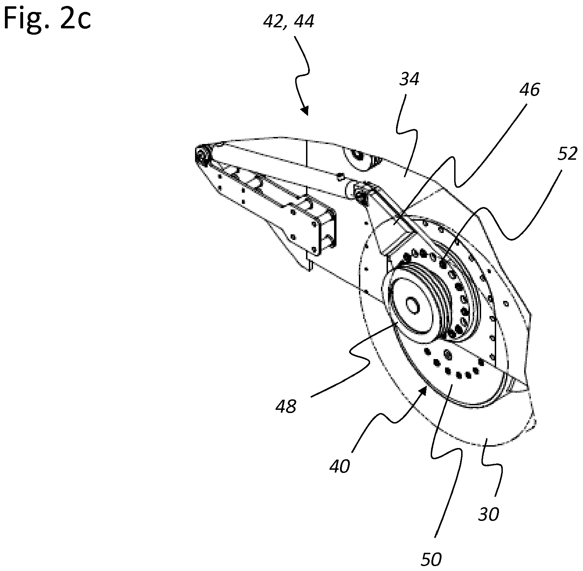

Die drei schematischen Ansichten der Fig. 2 zeigen eine Ausführungsvariante des erfindungsgemäßen Bodenbearbeitungswerkzeugs 14, das über Koppelelemente 28a und 28b zumindest mit den Unterlenkern eines Dreipunkt-Krafthebers 18 verbunden werden kann (vgl. Fig. 1). Das Bodenbearbeitungswerkzeug bzw. -gerät 14 umfasst eine Werkzeugwelle 30, die in einer Betriebslage (vgl. Fig. 1) ungefähr horizontal rotiert und motorisch angetrieben ist, bspw. über einen hydrostatischen Antrieb, einen sog. Ölmotor, oder über einen elektromotorischen Antrieb. Die Werkzeugwelle 30 ist mit einer Vielzahl von umfänglich und über ihre Breite verteilt angeordneten Werkzeugelementen 32 ausgestattet, von denen der besseren Übersichtlichkeit in Fig. 2a nur ein einzelnes Werkzeugelement 32 dargestellt ist. Die Werkzeugelemente 32 dienen der Material abtragenden Bodenbearbeitung. Zudem ist eine die rotierende Werkzeugwelle 30 abschirmende Einhausung 34 vorhanden, aus der die Werkzeugwelle 30 mit den Werkzeugelementen 32 nach unten herausragt. Die Einhausung 34 kann wahlweise gleichzeitig einen Geräterahmen 36 bilden oder an diesem befestigt sein (vgl. Fig. 2a), wobei der Geräterahmen 36 gleichzeitig über die erforderlichen Aufhängungs- und/oder Koppelelemente 28a, 28b zur lösbaren Verbindung mit dem Traktor 16 verfügt.

Gemäß der Erfindung ist die Werkzeugwelle 30 weitgehend in jeder Betriebslage der Maschine 10 nach allen Seiten durch die Einhausung 34 abgeschirmt, was der Unfallverhütung und der Betriebssicherheit dient. Wie es die Fig. 1 erkennen lässt, sitzt die Einhausung 34 im Betrieb der Maschinenkombination 10 bei rotierender Werkzeugwelle 30 und im Eingriff mit dem Boden 38 befindlichen Werkzeugelementen 32 auf dem Boden auf bzw. ist gering von diesem beabstandet (vgl. Fig. 1). Um dies zu ermöglichen, ist die Werkzeugwelle 30 innerhalb der Einhausung 34 und gegenüber dem Geräterahmen 36 in ihrer Höhe verstellbar, wobei diese Verstellbewegung vorzugsweise in einer Weise auf die Hebe- und Senkbewegungen des gesamten Gerätes 14 abgestimmt sind, dass der untere Rand der Einhausung 34 nur gering vom Boden 38 abgehoben ist, während die Werkzeugwelle 30 rotiert. Durch die Höhenverstellbarkeit der Werkzeugwelle 30 relativ zur Einhausung 34 bzw. zum Geräterahmen 36 kann die Eingriffstiefe der Werkzeugwelle 30 in den Boden 38 variabel gehalten werden, und dies unter weitgehend gleichbleibender Abdeckung oder Abschirmung der rotierenden Werkzeugwelle 30 durch die Einhausung 34, unabhängig von der jeweils aktuellen Eingriffstiefe der rotierenden Werkzeugwelle 30 bzw. deren Werkzeugelementen 32.

Die variable Abschirmung wird dadurch erreicht, dass die Werkzeugwelle 30 mit unterschiedlicher Eingriffstiefe in den Boden 38 unterschiedlich weit nach unten aus der Einhausung 34 herausragt. Da bei angehobenem Bodenbearbeitungswerkzeug 14 und weiterhin drehender Werkzeugwelle 30 unter ungünstigen Umständen eine Kontaktierung nicht ganz ausgeschlossen werden kann, obwohl die Werkzeugwelle 30 nach unten nicht mehr aus der Einhausung 34 ragt und somit zu allen Seiten vollständig abgedeckt ist, kann es ggf. sinnvoll sein, eine Abschaltautomatik - ggf. kombiniert mit einer mechanischen Bremse - vorzusehen, die für einen schnellen und verzögerungsarmen Stillstand der Werkzeugwelle 30 sorgt, sobald das Gerät 14 angehoben wird. Auf diese Weise kann ein versehentliches Weiterlaufen der Werkzeugwelle 30 unterbunden werden, wenn der Oberlenker des Heckkrafthebers 18 des Traktors 16 eingezogen und dadurch das Gerät 14 angehoben und nach oben verschwenkt wird, was bspw. für Transport- oder Umsetzfahrten sinnvoll ist.

Zum Zweck der Verstellbarkeit ist die Werkzeugwelle 30 beidseitig in der Einhausung 34 und/oder im Maschinenrahmen 36 über Exzenterlagerungen 40 höhenverstellbar gehalten und gelagert. Mit Hilfe dieser Exzenterlagerungen 40 der Werkzeugwelle 30 ist dafür gesorgt, dass bei unterschiedlichen Bearbeitungstiefen der Maschine 14 nicht die Einhausung 34 oder der Maschinenrahmen 36 angehoben oder abgesenkt wird, sondern im Wesentlichen die darin gelagerte Werkzeugwelle 30. Zu diesem Zweck sind die beidseitigen Exzenterlagerungen 40 der Werkzeugwelle 30 mit geeigneten Stellelementen 42 gekoppelt, welche die exzentrisch gelagerten Elemente der Exzenterlagerung 40 verdrehen und auf diese Weise die Werkzeugwelle gegenüber der Einhausung anheben oder absenken kann/können, sobald die Maschine 14 in den Boden 38 tiefer oder weniger tief eingesenkt wird. Eine solche Verstellbarkeit der Werkzeugwelle 30 gegenüber der Einhausung 34 bzw. dem Maschinenrahmen 36 des Bodenbearbeitungswerkzeuges 14 kann in vorteilhafter Weise zur exakten Steuerung der Bearbeitungstiefe genutzt werden. Da die Maschine 14 beim Beginn der Bearbeitung normalerweise soweit abgesenkt wird, bis der untere Rand der Einhausung 34 am Boden 38 aufliegt bzw. nur noch gering vom Boden 38 beabstandet ist, kann diese Betriebsstellung in vorteilhafter Weise zur Generierung eines Referenzwertes verwendet werden, so dass die Bearbeitungstiefe und Eingriffstiefe der Fräswelle bzw. der Werkzeugwelle 30 weitestgehend mittels der zwei oder mehr Stellelemente 40 zur Verdrehung der exzentrischen Wellenlagerungen 40 gesteuert werden kann.

Die Stellelemente 42 zur Verdrehung der exzentrischen Wellenlagerung 40 können bspw. gemäß Fig. 2 durch Hydraulik- oder Pneumatikzylinder 44 gebildet sein, die mit einem Ausleger 46 der Exzenterlagerung 40 verbunden sind und durch Linearhubbewegungen über diesen Ausleger 46 den Exzenter 40 unter gleichzeitiger Anhebung oder Absenkung der Werkzeugwelle 30 verdrehen. Wie es die Fig. 2 erkennen lässt, dürfen die Drehachsen der Werkzeugwelle 30 und der Exzenterlagerung 40 nicht fluchten, da ansonsten keine Hebe- und Senkbewegungen ermöglicht wären. Die Drehachse der Werkzeugwelle 30 liegt vielmehr unterhalb der Dreh- oder Schwenkachse der Exzenterlagerung 40, wobei eine Drehübertragung der Motorleistung auf die Werkzeugwelle 30 zu deren Antrieb über ein - hier nicht erkennbares - Vorgelegegetriebe o. dgl. Übersetzung erfolgen kann. Die Motorleistung kann bspw. über einen Riemenantrieb auf die außen liegende Riemenscheibe 48 übertragen werden, deren Drehachse mit der Schwenkachse der Exzenterlagerung 40 fluchtet. Die weitere Antriebsübersetzung kann dann durch die Exzenterlagerung 40 hindurch auf das verkleidete Vorgelegegetriebe 50 erfolgen, so dass die Werkzeugwelle 30 in die gewünschte Rotation versetzbar ist.

Die schematischen Ansichten der Figuren 2a und 2c verdeutlichen eine Betriebslage mit abgesenkter Werkzeugwelle 30 und eingezogenem Hydraulikzylinder 44, der gelenkig am Geräterahmen 36 gelagert und mit dem Ausleger 46 der Exzenterlagerung 40 verbunden ist. Die Fig. 2b zeigt einen voll ausgefahrenen Hydraulikzylinder 44, wodurch die Werkzeugwelle 30 um einen definierten Betrag angehoben ist. Die Darstellungen der Fig. 2 zeigen zudem die erfindungsgemäße Ausgestaltung der Exzenterlagerung 40, die an jeder Seite der Einhausung 34 jeweils einen Lagerschild 52 aufweist, der drehbar in der Seitenwand der Einhausung 34 bzw. des Maschinenrahmens 36 gelagert ist und über einen Stellhebel oder den Ausleger 46 verfügt, an dem das Stellelement 42 bzw. der Stellzylinder 44 angelenkt ist. Durch die maschinenfeste Anlenkung des anderen Endes des Stellzylinders 44 kann dessen gesteuerte Auszugs- oder Einzugsbewegung den Lagerschild 52 in gewünschter Weise verdrehen, wodurch gleichzeitig die exzentrisch darin gelagerte Werkzeugwelle 30 in gewünschter Weise in kurvenförmiger Bewegung angehoben oder abgesenkt werden kann.

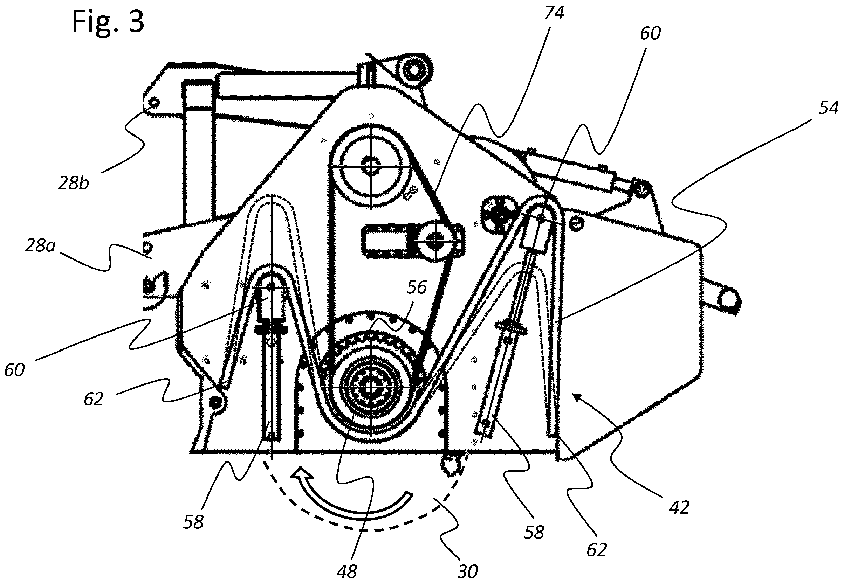

Wahlweise kann das Stellelement 42 gemäß Fig. 1 und der Detail-Seitenansicht der Fig. 3 auch wenigstens ein Zugmittel 54 umfassen, das mit einem Verstellrad 56 an der Exzenterlagerung 40 zusammenwirkt und im Eingriff steht, wobei eine Verstellung des Zugmittels 54 ein Verdrehen des Exzenters 40 bzw. des die Werkzeugwelle 30 exzentrisch lagernden Lagerschildes 52 bewirkt. Diese Verstellvariante umfasst gemäß Fig. 1 und Fig. 3 ein mehrfach umgelenktes Zugmittel 54 wie eine Rollen- oder Gliederkette oder einen Zugriemen o. dgl., dem linear verschiebbare Stellelemente 58 zugeordnet sind, die an ihren Enden jeweils Umlenkrollen 60 für das Zugmittel 54 aufweisen und die wechselweise gegensinnig bewegbar sind. Wird einer der Stellantriebe 58 ausgeschoben (in Fig. 3 der rechte Stellantrieb), wird das Zugmittel 54, das mit seinen jeweiligen Enden 62 dort oder an anderer Stelle an der Einhausung 34 bzw. am Geräterahmen 36 fest verankert sein muss, in diese Richtung gezogen, so dass gleichzeitig der andere Stellantrieb 58 eingeschoben werden muss (in Fig. 3 der linke Stellantrieb), um einen entsprechenden Abschnitt des Zugmittels 54 nachzulassen. Durch die Umschlingung des mit dem drehbaren Lagerschild 52 der Exzenterlagerung 40 drehfest verbundenen Verstellrades 56 mit dem zwischen den beiden wechselseitig steuerbaren Stellgliedern 58 befindlichen Zugmittelabschnitt 64 erfolgt die Drehung des Verstellrades 56 und des Lagerschildes 52 um einen definierten Winkel, was wiederum die Werkzeugwelle 30 entlang ihres gekrümmten Verstellweges anhebt oder absenkt.

Als Werkzeugwelle 30 kann insbesondere eine rotierende Fräswalze zum Einsatz kommen, die insbesondere eine Vielzahl von Rundschaft-Meißeln oder dergleichen Eingriffs- oder Werkzeugelemente 32 aufweisen kann, die für die Material abtragende Einwirkung auf feste Bodenoberflächen 38 wie Asphalt- oder Betondecken etc. geeignet sind. Diese Werkzeugwelle 30 bzw. Fräswalze kann unterschiedliche Arbeitsbreiten aufweisen. Eine typische Arbeitsbreite einer solchen Fräswalze kann bspw. ca. 2,4 Meter betragen.

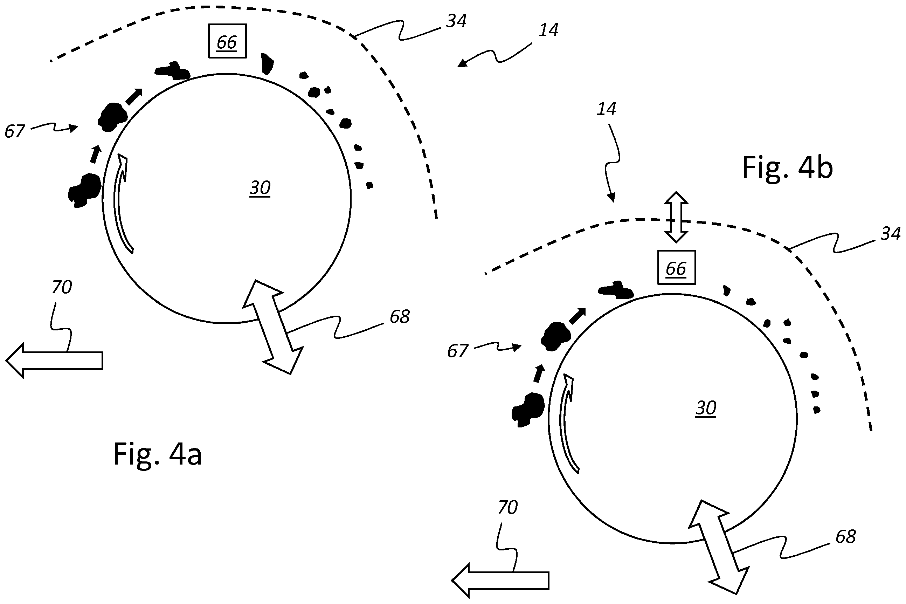

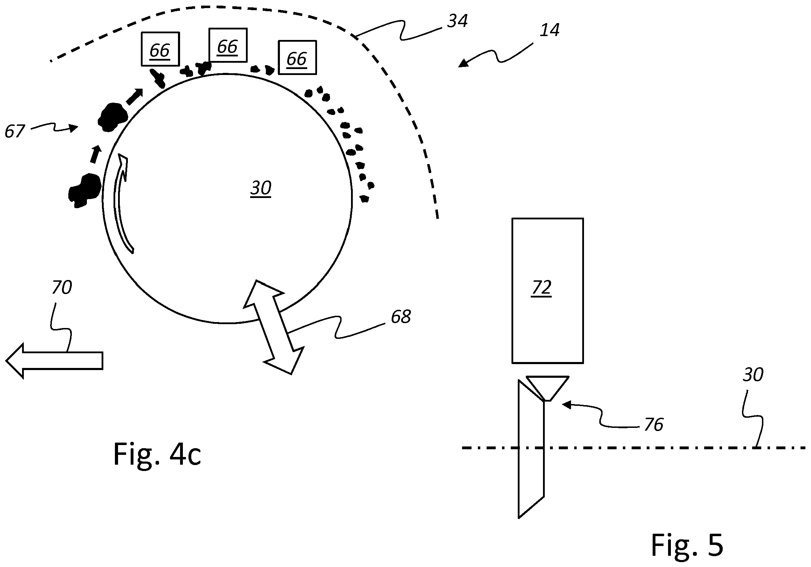

Die drei schematischen Seitenansichten der Fig. 4 zeigen jeweils die optionale Anordnung einer Schlagleiste 66 oberhalb der rotierenden Werkzeugwelle 30 des erfindungsgemäßen Bodenbearbeitungswerkzeugs 14 (Fig. 4, Fig. 4b) bzw. mehrerer solcher Schlagleisten 66 (Fig. 4c). Die in unterschiedlicher Höhe einstellbare Werkzeugwelle 30 (siehe Doppelpfeil 68) ermöglicht unterschiedliche Abstände der Werkzeugelemente 32 zur Schlagleiste 66, die in der ersten Ausführungsvariante als eine einzelne starre Schlagleiste 66 ausgebildet ist, die innerhalb der Einhausung 34 der Bodenbearbeitungsmaschine 14 angeordnet ist (vgl. Fig. 4a). Die Werkzeugelemente 32 fördern bei gegebener Fahrtrichtung 70 der Kombination 10 (vgl. Fig. 1) abgetragene Gesteinsbrocken 67 nach oben zur Schlagleiste 66, die dort für eine Zerkleinerung der Steine sorgen kann. Durch die Anordnung der Schlagleiste 66 oberhalb der in der Höhe verstellbaren Werkzeugwelle 30 kann je nach Verstellhöhe 68 der Werkzeugwelle 30 oder Fräswalze ein variabler Abstand zwischen der Schlagleiste 66 und der Werkzeugwelle 30 eingestellt werden, was wiederum Auswirkungen auf die Größe der Bruchstücke der an der Schlagleiste 66 zerkleinerten Steine und Gesteinsbrocken 67 haben kann.

Eine weitere sinnvolle Option kann darin bestehen, die Schlagleiste 66 gemäß Fig. 4b in ihrer Höhe innerhalb der Einhausung 34 verstellbar auszuführen, so dass der Abstand der Werkzeugwelle 30 von der Schlagleiste 66 unabhängig von der oder zusätzlich zur Höheneinstellung 68 der Werkzeugwelle 30 innerhalb der Einhausung 34 justiert werden kann, was Auswirkungen auf die Größe der zerkleinerten Gesteinsbrocken 67 hat. Eine solche Höheneinstellung der Schlagleiste 66 kann bspw. durch eine Serviceklappe o. dgl. in der Einhausung 34 ermöglicht werden.

Die schematische Ansicht der Fig. 4c zeigt eine weitere Variante der Bodenbearbeitungsmaschine 14, bei der mehrere solcher Schlagleisten 66 innerhalb der Einhausung 34 in Drehrichtung der Werkzeugwelle 30 hintereinander angeordnet sind. Bei dieser Anordnung sind in Drehrichtung der Werkzeugwelle 30 oder Fräswalze allmählich kleinere Abstände zwischen dem Außenumfang der Werkzeugwelle 30 und den Schlagleisten 66 vorzusehen, so dass diese in der Lage sind, das abgetragene Gestein 67 weitgehend vollständig in eine gewünschte Größe zu zerkleinern. Aufeinander folgende Schlagleisten 66 mit gleichen oder geringer werdenden Abständen sorgen dafür, dass keine Gesteinsbrocken 67 unzerkleinert bleiben oder zu große Gesteinsbrocken 67 verbleiben. Wahlweise kann bei dieser Anordnung eine der Schlagleisten 66 in ihrer Höhe innerhalb der Einhausung 34 verstellbar sein. Wahlweise können alle oder nur einige oder auch nur eine einzige dieser Schlagleisten 66 höhenverstellbar ausgeführt sein.

Die schematische Darstellung der Fig. 5 zeigt eine optionale Motoranordnung zum Antrieb der hier nur durch ihre Drehachse angedeuteten Werkzeugwelle 30 des Bodenbearbeitungswerkzeugs 14. So kann der Motor 72 - dies kann ein Ölmotor (hydrostatischer Antrieb) oder ein Elektromotor sein - oberhalb der Werkzeugwelle 30 im Maschinenrahmen 36 gelagert sein und bspw. über einen außen liegenden Riemenantrieb 74 verfügen, der die Motorwelle mit der Riemenscheibe 48 koppelt (vgl. Fig. 1, Fig. 2c, Fig. 3). Wahlweise kann der Motor 72 jedoch auch gemäß Fig. 5 über ein Stirn- oder Kegelradgetriebe 76 mit der Werkzeugwelle 30 gekoppelt sein, was eine sehr kompakte Anordnung ermöglicht.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Maschinenkombination
- 12: landwirtschaftliches Zugfahrzeug
- 14: Bodenbearbeitungsmaschine, Bodenbearbeitungsgerät, Fräswalze
- 16: Traktor
- 18: Dreipunkt-Kraftheber, Dreipunkt-Heckhydraulik
- 28a: erstes Koppelelement
- 28b: zweites Koppelelement
- 30: Werkzeugwelle, Fräswelle
- 32: Werkzeugelement, Meißel
- 34: Einhausung, Gehäuse, Abschirmung
- 36: Geräterahmen, Maschinenrahmen
- 38: Boden, Bodenoberfläche
- 40: Exzenterlagerung, Exzenter
- 42: Stellelement
- 44: Hydraulikzylinder, Stellzylinder
- 46: Ausleger
- 48: Riemenscheibe
- 50: Vorgelege, Vorgelegegetriebe
- 52: Lagerschild
- 54: Zugmittel
- 56: Verstellrad
- 58: Stellelement
- 60: Umlenkrolle
- 62: fixiertes Ende (des Zugmittels)
- 64: verstellbarer Zugmittelabschnitt
- 66: Schlagleiste
- 67: Gesteinsbrocken
- 68: Höhenverstellung
- 70: Fahrtrichtung
- 72: Motor, Antriebsmotor
- 74: Riemenantrieb
- 76: Stirnradgetriebe, Kegelradgetriebe

## Patentansprüche

1. Bodenbearbeitungswerkzeug (14) mit einer Werkzeugwelle (30) und einer Einhausung (34), wobei sich die Werkzeugwelle (30) komplett in der Einhausung (34) befindet, wobei eine Tiefenverstelleinrichtung die Werkzeugwelle (30) über eine aus der Drehachse der Werkzeugwelle (30) exzentrisch und außerhalb der Drehachse der Werkzeugwelle (30) angeordnete Lagerung über eine Kreisbewegung vertikal nach oben und nach unten in verschiedene Betriebslagen verstellt, und wobei
- eine Höhenverstellbarkeit (68) der Werkzeugwelle (30) gegenüber der Einhausung (34) einen Verstellweg aufweist, der zumindest abschnittsweise einer gekrümmten Kurve folgt,
- und bei welchem Bodenbearbeitungswerkzeug (14) die Werkzeugwelle (30) beidseitig in der Einhausung (34) über Exzenterlagerungen (40) höhenverstellbar gehalten und gelagert ist, und
- bei dem die Exzenterlagerungen (40) der Werkzeugwelle (30) unter gleichzeitiger Anhebung oder Absenkung der Werkzeugwelle (30) gegenüber der Einhausung (34) und/oder dem Maschinenrahmen (36) über wenigstens ein Stellelement (42, 58) verdrehbar sind, **dadurch gekennzeichnet, dass**
- eine jeweilige Exzenterlagerung (40) an einer jeweiligen Seite der Einhausung (34) einen Lagerschild (52) aufweist, der drehbar in der Seitenwand der Einhausung (34) gelagert ist und über einen Stellhebel oder einen Ausleger (46) verfügt, an dem das Stellelement (42) angelenkt ist.

2. Bodenbearbeitungswerkzeug nach Anspruch 1, bei dem die Werkzeugwelle (30) relativ zur Einhausung (34) höhenverstellbar ausgeführt ist.

3. Bodenbearbeitungswerkzeug nach Anspruch 1 oder 2, bei dem die Eingriffstiefe der Werkzeugwelle (30) in den Boden (38) variabel ist, insbesondere bei weitgehend gleichbleibender Abdeckung der rotierenden Werkzeugwelle (30) durch die Einhausung (34).

4. Bodenbearbeitungswerkzeug nach Anspruch 3, bei dem die Werkzeugwelle (30) mit unterschiedlicher Eingriffstiefe in den Boden (38) unterschiedlich weit nach unten aus der Einhausung (34) herausragt.

5. Bodenbearbeitungswerkzeug nach einem der Ansprüche 1 bis 4, bei dem das Stellelement (42, 58) einen oder mehrere Hydraulik- oder Pneumatikzylinder (44) umfasst, die mit einem Ausleger (46) der Exzenterlagerung (40) verbunden sind und durch Linearhubbewegungen über diesen Ausleger (46) den Exzenter (40) unter gleichzeitiger Anhebung oder Absenkung der Werkzeugwelle (30) verdrehen.

6. Bodenbearbeitungswerkzeug nach einem der Ansprüche 1 bis 4, bei dem das Stellelement (58) wenigstens ein Zugmittel (54) umfasst, das mit einem Verstellrad (56) an der Exzenterlagerung (40) zusammenwirkt und im Eingriff steht, wobei eine Verstellung des Zugmittels (54) ein Verdrehen des Exzenters (40) bewirkt.

7. Bodenbearbeitungswerkzeug nach einem der Ansprüche 1 bis 6, bei dem die Werkzeugwelle (30) eine rotierende Fräswalze ist, die insbesondere eine Vielzahl von Rundschaft-Meißeln oder dergleichen Eingriffs- oder Werkzeugelemente (32) aufweist.

8. Bodenbearbeitungswerkzeug nach einem der Ansprüche 1bis 7, bei dem die Werkzeugwelle (30) über ein Vorgelegegetriebe (50) und/oder wenigstens eine Zahnradpaarung mit einem mit den Exzenterlagerungen (40) fluchtenden Antriebsrad gekoppelt ist.

9. Bodenbearbeitungswerkzeug nach einem der Ansprüche 1 bis 8, bei dem die Werkzeugwelle (30) über einen dem Werkzeug (14) selbst oder dessen Rahmen (36) zugeordneten Antriebsmotor (72) betrieben ist.

10. Bodenbearbeitungswerkzeug nach einem der Ansprüche 1 bis 9, bei dem innerhalb der Einhausung (34) wenigstens eine Schlagleiste (66) zur Zerkleinerung von abgetragenem und/oder von der Werkzeugwelle (30) aufgenommenem Gestein angeordnet ist.

11. Bodenbearbeitungswerkzeug nach Anspruch 10, bei dem die wenigstens eine Schlagleiste (66) oberhalb der Werkzeugwelle (30) in der Einhausung (34) angeordnet ist.

12. Bodenbearbeitungswerkzeug nach Anspruch 10 oder 11, bei dem die Werkzeugwelle (30) je nach ihrer Verstellhöhe bzw. Betriebslage einen variablen Abstand zur wenigstens einen Schlagleiste (66) aufweist.

13. Bodenbearbeitungswerkzeug nach einem der Ansprüche 10 bis 12, bei der die wenigstens eine Schlagleiste (66) in ihrer Höhe innerhalb der Einhausung (34) verstellbar ist.

14. Maschinenkombination (10), umfassend ein Zugfahrzeug (12, 16) sowie ein daran angebautes, insbesondere front- oder heckseitig angelenktes, höhenverstellbar geführtes Bodenbearbeitungswerkzeug (14) gemäß einem der Ansprüche 1 bis 13.

## Claims

1. A tillage implement (14) with a tool shaft (30) and an enclosure (34), wherein the tool shaft (30) is located entirely in the enclosure (34); wherein a depth adjustment device adjusts the tool shaft (30) by way of a circular movement vertically upward and downward into different operating positions via a bearing that is disposed eccentrically from the axis of rotation of the tool shaft (30) and outside of the axis of rotation of the tool shaft (30); and wherein
- a height adjustability (68) of the tool shaft (30) in relation to the enclosure (34) has an adjustment path that at least in sections follows a curved line;
- and in which tillage implement (14) the tool shaft (30) is height-adjustably held and mounted on both sides of the enclosure (34) via eccentric bearings (40); and
- in which tillage implement (14) the eccentric bearings (40) of the tool shaft (30) are twistable via at least one adjustment element (42, 58) under simultaneous lifting or lowering of the tool shaft (30) in relation to the enclosure (34) and/or in relation to the machine frame (36), **characterised in that**
- a particular eccentric bearing (40) has a bearing shield (52) at a particular side of the enclosure (34), the bearing shield (52) being rotatably mounted in the sidewall of the enclosure (34) and having an adjustment lever or a cantilever (46) to which the adjustment element (42) is hinged.

2. The tillage implement as recited in claim 1, with the tool shaft (30) being designed to be height-adjustable relative to the enclosure (34).

3. The tillage implement as recited in claim 1 or 2, with the depth of engagement of the tool shaft (30) into the soil (38) being variable, in particular, with the covering of the rotating tool shaft (30) by the enclosure (34) remaining largely the same.

4. The tillage implement as recited in claim 3, with the tool shaft (30) protruding from the enclosure (34) differently far downward with different depths of engagement into the soil (38).

5. The tillage implement as recited in one of the claims 1 to 4, with the adjustment element (42, 58) comprising one or more hydraulic or pneumatic cylinders (44), which are connected to a cantilever (46) of the eccentric bearing (40) and which by way of linear stroke movements via said cantilever (46) twist the eccentric (40) under simultaneous lifting or lowering of the tool shaft (30).

6. The tillage implement as recited in one of the claims 1 to 4, with the adjustment element (58) comprising at least one traction means (54), which interacts and is in engagement with an adjustment wheel (56) at the eccentric bearing (40), wherein an adjustment of the traction means (54) causes a twisting of the eccentric (40).

7. The tillage implement as recited in one of the claims 1 to 6, with the tool shaft (30) being a rotating milling drum, which in particular has a multitude of round shank chisels or the like engagement elements or implement elements (32).

8. The tillage implement as recited in one of the claims 1 to 7, with the tool shaft (30) being coupled by way of an intermediate gearbox (50) and/or at least one gear wheel pairing with a drive wheel that is aligned flush with the eccentric bearings (40).

9. The tillage implement as recited in one of the claims 1 to 8, with the tool shaft (30) being operated by way of a drive motor (72) that is associated with the implement (14) itself or with its frame (36).

10. The tillage implement as recited in one of the claims 1 to 9, with at least one beater bar (66) being disposed within the enclosure (34), for the purpose of milling excavated rock and/or rock having been collected by the tool shaft (30).

11. The tillage implement as recited in claim 10, with the at least one beater bar (66) being disposed above the tool shaft (30) in the enclosure (34).

12. The tillage implement as recited in claim 10 or 11, with the tool shaft (30) having a variable spacing to the at least one beater bar (66), according to the adjustment height or to the operating position, as the case may be, of the tool shaft (30).

13. The tillage implement as recited in one of the claims 10 to 12, with the at least one beater bar (66) being adjustable in its height within the enclosure (34).

14. A machine combination (10), comprising a towing vehicle (12, 16), as well as a tillage implement (14) according to one of the claims 1 to 13 mounted thereto, the tillage implement (14) being in particular hinged at the front or rear end and being height-adjustably guided.

## Revendications

1. Outil à travailler le sol (14) comprenant un arbre d'outil (30) et un carter (34), dans lequel ledit arbre d'outil (30) se trouve complètement à l'intérieur du carter (34), dans lequel un dispositif de réglage en profondeur règle l'arbre d'outil (30), au moyen d'un mouvement circulaire, verticalement vers le haut et vers le bas dans des positions de fonctionnement différentes, par un palier disposé de façon excentrique par rapport à l'axe de rotation de l'arbre d'outil (30) et à l'extérieur de l'axe de rotation de l'arbre d'outil (30), et dans lequel,
- une possibilité de réglage en hauteur (68) de l'arbre d'outil (30) par rapport au carter (34) présente un chemin de réglage qui suit, au moins par sections, une courbe courbée,
- et dans lequel outil à travailler le sol (14) ledit arbre d'outil (30) est maintenu et logé de manière réglable en hauteur de part et d'autre dans le carter (34) par le biais de paliers excentriques (40), et
- dans lequel lesdits paliers excentriques (40) de l'arbre d'outil (30) peuvent être tournés par l'intermédiaire d'au moins un élément de réglage (42, 58), tout en faisant monter ou descendre l'arbre d'outil (30) par rapport au carter (34) et/ou au bâti de machine (36), **caractérisé par le fait qu'**
- un palier excentrique (40) respectif présente une flasque (52) sur un côté respectif du carter (34), qui est logée à rotation dans la paroi latérale du carter (34) et qui dispose d'un levier de réglage ou d'un bras (46) sur lequel ledit élément de réglage (42) est articulé.

2. Outil à travailler le sol selon la revendication 1, dans lequel ledit arbre d'outil (30) est réalisé de manière à être réglable en hauteur par rapport au carter (34).

3. Outil à travailler le sol selon la revendication 1 ou 2, dans lequel la profondeur d'engagement de l'arbre d'outil (30) dans le sol (38) est variable, en particulier avec une couverture dans une large mesure constante, par le carter (34), de l'arbre d'outil (30) tournant.

4. Outil à travailler le sol selon la revendication 3, dans lequel l'arbre d'outil (30) ayant une profondeur d'engagement différente dans le sol (38) fait saillie du carter (34) d'une mesure différente vers le bas.

5. Outil à travailler le sol selon l'une quelconque des revendications 1 à 4, dans lequel ledit élément de réglage (42, 58) comprend un ou plusieurs vérin(s) hydraulique(s) ou pneumatique(s) (44) qui sont reliés à un bras (46) du palier excentrique (40) et qui font tourner l'excentrique (40) par des mouvements de levage linéaires via ce bras (46), tout en faisant monter ou descendre l'arbre d'outil (30).

6. Outil à travailler le sol selon l'une quelconque des revendications 1 à 4, dans lequel ledit élément de réglage (58) comprend au moins un moyen de traction (54) qui agit de concert et est en prise avec une roue de réglage (56) sur le palier excentrique (40), dans lequel un réglage du moyen de traction (54) provoque une rotation de l'excentrique (40).

7. Outil à travailler le sol selon l'une quelconque des revendications 1 à 6, dans lequel l'arbre d'outil (30) est un cylindre de fraisage rotatif qui, en particulier, présente une pluralité de burins à queue ronde ou des éléments de prise ou d'outil (32) similaires.

8. Outil à travailler le sol selon l'une quelconque des revendications 1 à 7, dans lequel l'arbre d'outil (30) est couplé via une transmission intermédiaire (50) et/ou au moins une paire de roues dentées à une roue motrice en alignement avec les paliers excentriques (40).

9. Outil à travailler le sol selon l'une quelconque des revendications 1 à 8, dans lequel l'arbre d'outil (30) est actionné par un moteur d'entraînement (72) qui est associé à l'outil (14) même ou au bâti (36) de celui-ci.

10. Outil à travailler le sol selon l'une quelconque des revendications 1 à 9, dans lequel au moins une barre de frappe (66) destinée à concasser de la roche enlevée et/ou reçue par l'arbre d'outil (30) est disposée à l'intérieur du carter (34).

11. Outil à travailler le sol selon la revendication 10, dans lequel ladite au moins une barre de frappe (66) est disposée au-dessus de l'arbre d'outil (30) à l'intérieur du carter (34).

12. Outil à travailler le sol selon la revendication 10 ou 11, dans lequel l'arbre d'outil (30) présente une distance variable par rapport à ladite au moins une barre de frappe (66), au fur et à mesure de son hauteur de réglage ou bien de sa position de fonctionnement.

13. Outil à travailler le sol selon l'une quelconque des revendications 10 à 12, dans lequel ladite au moins une barre de frappe (66) est réglable en son hauteur à l'intérieur du carter (34).

14. Combinaison de machine (10) comprenant un véhicule tracteur (12, 16) ainsi qu'un outil à travailler le sol (14) selon l'une quelconque des revendications 1 à 13, qui est monté sur celui-ci, en particulier articulé côté frontal ou arrière, et guidé de manière à être réglable en hauteur.
